(19) Europäisches Patentamt / European Patent Office / Office européen des brevets

(11) **EP 4 191 148 B1**

(12) **EUROPEAN PATENT SPECIFICATION**

(45) Date of publication and mention
of the grant of the patent:
**21.02.2024 Bulletin 2024/08**

(21) Application number: **20947714.0**

(22) Date of filing: **31.07.2020**

(51) International Patent Classification (IPC):
**F24F 13/22** *(2006.01)*    **F24F 11/00** *(2018.01)*
**F24F 11/61** *(2018.01)*    **F24F 11/77** *(2018.01)*
**F24F 7/00** *(2021.01)*

(52) Cooperative Patent Classification (CPC):
**F24F 11/77; F24F 11/0001; F24F 11/61;
F24F 13/22;** F24F 2007/005; Y02B 30/70

(86) International application number:
**PCT/JP2020/029526**

(87) International publication number:
**WO 2022/024374 (03.02.2022 Gazette 2022/05)**

(54) **AIR CONDITIONING SYSTEM AND CONDENSATION PREVENTION METHOD**

KLIMAANLAGE UND KONDENSATIONSVERHINDERUNGSVERFAHREN

SYSTÈME DE CLIMATISATION ET PROCÉDÉ DE PRÉVENTION CONTRE LA CONDENSATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**07.06.2023 Bulletin 2023/23**

(73) Proprietor: **MITSUBISHI ELECTRIC
CORPORATION
Chiyoda-ku
Tokyo 100-8310 (JP)**

(72) Inventor: **FAN, Yunqing
Tokyo 100-8310 (JP)**

(74) Representative: **Pfenning, Meinig & Partner mbB
Patent- und Rechtsanwälte
An der Frauenkirche 20
01067 Dresden (DE)**

(56) References cited:
EP-A1- 2 918 935       WO-A1-2009/058127
CN-A- 107 561 596      DE-A1- 4 333 193
JP-A- H11 173 623      JP-A- 2004 324 942
JP-A- 2005 003 321     JP-A- 2005 003 321
JP-A- 2006 183 936     JP-A- 2008 170 056
JP-A- 2016 169 874     KR-B1- 101 498 572
SE-C2- 540 444

## Description

Technical Field

The present invention relates to an air-conditioning system including a ventilation apparatus and a condensation prevention method.

Background Art

In recent years, frames of houses have been made to have higher air tightness and higher thermal insulation. Thus, it has been generalized that in winter, humidification is performed along with heating. Inevitably, condensation easily occurs. To be more specific, for example, when a person is present in a living room, in many cases, a door of the living room is open. In this case, moisture in the air in the living room transfers to a room adjacent to the living room since the door is open. If the door is kept open, the room temperature of the living room drops with the passage of time. As a result, for example, condensation occurs in a cool place such as a closet or a window located behind with a curtain closed. Furthermore, when a heating operation of an air-conditioning apparatus in the living room is stopped, the room temperature of the living room starts to drop, thus causing condensation.

Not only when a person is present in a living room in the daytime, but when a person is sleeping in a bedroom at nighttime, in many cases, humidification is performed, with a door in the room closed. If opening and closing of the door are not performed at nighttime, humidity of the living room excessively increases and condensation occurs at a wall or other portions. Condensation moisture gathers mold, and the quality of air in the entire room worsens. Thus, condensation adversely affects human health as well as hygiene.

Air-conditioning apparatuses that prevent condensation have been proposed (see, for example, Patent Literature 1). The air-conditioning apparatus disclosed in Patent Literature 1 detects an indoor temperature, an outdoor temperature, and an indoor humidity, calculates the surface temperature of a wall or a window in the indoor space from the outdoor temperature, and performs a defrosting operation such that the calculated temperature does not fall to or below a dew-point temperature calculated from the indoor temperature and the indoor humidity.

Citation List

Patent Literature

Patent Literature 1: Japanese Unexamined Patent Application Publication No. 2004-324942
JP 2005 003321 discloses running synchronized supply and exhaust fans.
KR 101 498 572 discloses an air conditioning apparatus exhausting moist indoor air to prevent dew condensation.

Summary of Invention

Technical Problem

The air-conditioning apparatus disclosed in Patent Literature 1 compares the state of air in a room that is an air-conditioning target space with the state of outside air, and performs a defrosting operation without causing condensation; however, it does not consider the indoor air environment of another room adjacent to the room which is the air-conditioning target space. Therefore, there is a risk that the air-conditioning apparatus of Patent Literature 1 may cause condensation in the adjacent room, that is, another room that is not directly air-conditioned.
The present invention is applied to solve the above problem, and relates to an air-conditioning system and a condensation prevention method that are capable of reducing occurrence of condensation in a room that is not directly air-conditioned. Solution to Problem
An air-conditioning system according to an embodiment of the present invention includes: an air-conditioning apparatus configured to perform a plurality of operations to condition air in a first room, which correspond to respective operations modes; a first ventilation apparatus for being installed in the first room and configured to be caused to switch an operation of the first ventilation apparatus between an air supply operation in which air is sucked from an outdoor space into an indoor space and an exhaust ventilation operation in which air is discharged from the indoor space to the outdoor space; a second ventilation apparatus for being installed in a second room that is adjacent to the first room and configured to be caused to switch an operation of the second ventilation apparatus between the air supply operation and the exhaust ventilation operation; a detection module configured to detect a communication state between the first room and the second room; and a controller configured to control the operation of each of the first ventilation apparatus and the second ventilation apparatus based on the operation mode of the air-conditioning apparatus and the communication state detected by the detection module.

A condensation prevention method according to another embodiment of the present invention is a condensation prevention method for an air-conditioning system that includes: an air-conditioning apparatus configured to perform a plurality of operations to condition air in a first room, which correspond to respective operation modes; a first ventilation apparatus installed in the first room and configured to be caused to switch an operation of the first ventilation apparatus between an air supply operation in which air is sucked from an outdoor space into an indoor space and an exhaust ventilation operation in which air is discharged from the indoor space to the outdoor space; a second ventilation apparatus installed in a second room that is adjacent to the first room and configured to be caused to switch an operation of the second ventilation apparatus between the air supply operation and the exhaust ventilation operation; a detection module configured to detect a communication state between the first room and the second room; and a controller. The condensation prevention method includes: determining an operation mode of the air-conditioning apparatus and the communication state detected by the detection module; and controlling the operation of each of the first ventilation apparatus and the second ventilation apparatus based on results of the determination of the operation mode and the communication state.

Advantageous Effects of Invention

According to the present invention, it is determined, based on the operation mode of an air-conditioning apparatus and the communication state between two rooms, whether or not a second one of the two rooms is indirectly air-conditioned through a first one of the two rooms. By controlling operations of the first ventilation apparatus and the second ventilation apparatus based on the result of the determination, it is possible to reduce stagnation of air in the second room, and as a result, prevent occurrence of condensation in the first room and the second room. Brief Description of Drawings

[Fig. 1] Fig. 1 illustrates a configuration example of an air-conditioning system according to Embodiment 1.
[Fig. 2] Fig. 2 is a refrigerant circuit diagram illustrating a configuration example of an air-conditioning apparatus as illustrated in Fig. 1.
[Fig. 3] Fig. 3 is a block diagram illustrating a configuration example of an air-conditioning controller as illustrated in Fig. 2.
[Fig. 4] Fig. 4 is a functional block diagram illustrating a configuration example of a controller as illustrated in Fig. 1.
[Fig. 5] Fig. 5 is a hardware configuration diagram illustrating a configuration example of the controller as illustrated in Fig. 4.
[Fig. 6] Fig. 6 is a hardware configuration diagram illustrating another configuration example of the controller as illustrated in Fig. 4.
[Fig. 7] Fig. 7 is a flowchart illustrating an operation procedure of the air-conditioning system according to Embodiment 1.
[Fig. 8] Fig. 8 is a flowchart illustrating another operation procedure of the air-conditioning system according to Embodiment 1.
[Fig. 9] Fig. 9 is a diagram illustrating the case where a door is in the opened state in a heating operation of the air-conditioning apparatus in the air-conditioning system illustrated in Fig. 1.

[Fig. 10] Fig. 10 is a diagram illustrating the case where the door is in the closed state during a heating operation of the air-conditioning apparatus in the air-conditioning system illustrated in Fig. 1.
[Fig. 11] Fig. 11 is a graph indicating an example of changes of an absolute humidity and a condensation amount with the passage of time.
[Fig. 12] Fig. 12 illustrates the case where the door is in the opened state during a cooling operation of the air-conditioning apparatus in the air-conditioning system illustrated in Fig. 1.
[Fig. 13] Fig. 13 illustrates the case where the door is in the closed state during the cooling operation of the air-conditioning apparatus in the air-conditioning system illustrated in Fig. 1.
[Fig. 14] Fig. 14 is a block diagram illustrating another configuration example of the air-conditioning system according to Embodiment 1.
[Fig. 15] Fig. 15 is a block diagram for explanation of another control by the controller in the air-conditioning system according to Embodiment 1.
[Fig. 16] Fig. 16 is a diagram illustrating a configuration example of an air-conditioning system according to Embodiment 2.
[Fig. 17] Fig. 17 is a functional block diagram for explaining control by a controller as illustrated in Fig. 16.
[Fig. 18] Fig. 18 illustrates the case where a door is closed in a heating operation of an air-conditioning apparatus in a first room in the air-conditioning system illustrated in Fig. 16.
[Fig. 19] Fig. 19 is a flowchart indicating an operation procedure of the air-conditioning system according to Embodiment 2 in a cooling operation of the air-conditioning apparatus in the first room as illustrated in Fig. 16.
[Fig. 20] Fig. 20 illustrates where the door is in the closed state in a cooling operation of the air-conditioning apparatus in the first room in the air-conditioning system as illustrated in Fig. 16.

Description of Embodiments

Embodiment 1

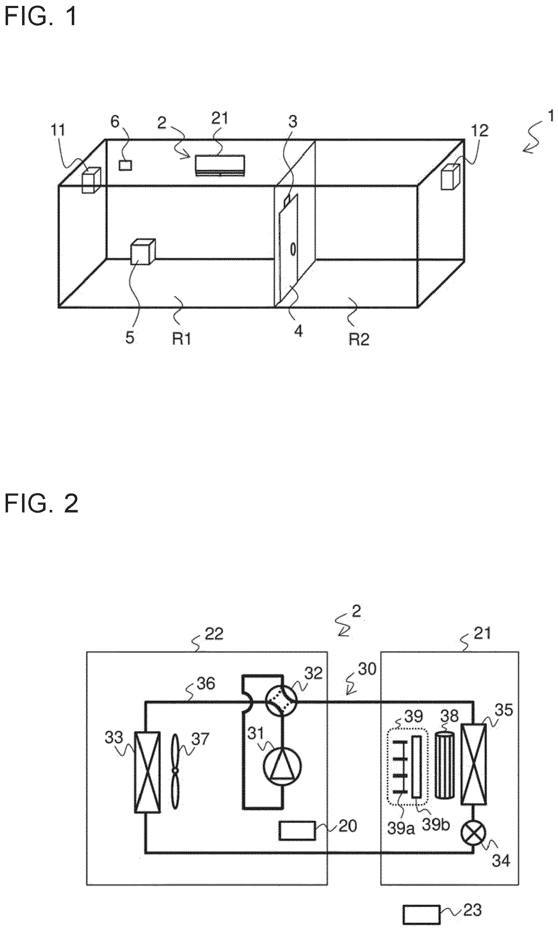

A configuration of an air-conditioning system according to Embodiment 1 will be described. Fig. 1 illustrates a configuration example of the air-conditioning system according to Embodiment 1. An air-conditioning system 1 includes: an air-conditioning apparatus 2 that includes an indoor unit 21; a first ventilation apparatus 11; a second ventilation apparatus 12; an opening/closing detection module 3 that detects opening and closing of a door 4; and a controller 5.
The indoor unit 21 and the first ventilation apparatus 11 are installed in a first room R1. The second ventilation apparatus 12 is installed in a second room R2 adjacent to the first room R1. The door 4 is located between the first room R1 and the second room R2. The opening/closing detection module 3 is provided to detect a communication state indicating whether or not air flows between the first room R1 and the second room R2. The opening/closing detection module 3 is, for example, a magnetic proximity sensor such as a reed switch. The opening/closing detection module 3 may be a mechanical switch. Furthermore, the opening/closing detection module 3 outputs a signal indicating an opened state in which the door 4 is in an opened state, or a signal indicating a closed state in which the door 4 is in a closed state. Each of the opened state and the closed state corresponds to the communication state.

Air in the first room R1 is directly conditioned by the air-conditioning apparatus 2. In contrast, when the door 4 is in the opened state, air in the second room R2 is indirectly conditioned by heat exchange with the air in the first room R1 that is conditioned by the air-conditioning apparatus 2. Thus, the first room R1 is an area to be directly air-conditioned, and the second room R2 is an area to be indirectly air-conditioned.

The controller 5 is connected to the air-conditioning apparatus 2, the first ventilation apparatus 11, the second ventilation apparatus 12, and the opening/closing detection module 3 by signal lines (not illustrated). It should be noted that communication and connection between the controller 5 and each of the air-conditioning apparatus 2, the first ventilation apparatus 11, the second ventilation apparatus 12, and the opening/closing detection module 3 are not necessarily performed using the signal lines and may be performed wirelessly.

An environment detection module 6 that detects the state of air in a room is provided in the first room R1. The state of air corresponds to one or both of temperature and humidity. The environment detection module 6 is, for example, a temperature and humidity sensor. The environment detection module 6 may be a combination of a temperature sensor (not illustrated) and a humidity sensor (not illustrated). The temperature sensor is, for example, a thermistor. Furthermore, in each of the first room R1 and the second room R2, a ventilation opening (not illustrated) that allows air in the indoor space to naturally flow from the indoor space to the outside may be provided.

A configuration of the air-conditioning apparatus 2 including the indoor unit 21 as illustrated in Fig. 1 will be described. Fig. 2 is a refrigerant circuit diagram illustrating a configuration example of the air-conditioning apparatus as illustrated in Fig. 1. As illustrated in Fig. 2, the air-conditioning apparatus 2 includes the indoor unit 21 installed in the first room R1, an outdoor unit 22 connected to the indoor unit 21 by a refrigerant pipe 36, and a remote control unit 23.

The outdoor unit 22 includes a compressor 31, a four-way valve 32, a heat-source-side heat exchanger 33, an outdoor fan 37, and an air-conditioning controller 20. The indoor unit 21 includes an expansion device 34, a load-side heat exchanger 35, an indoor fan 38, and an airflow direction adjustment module 39. The airflow direction adjustment module 39 includes a horizontal flap 39a that changes an air blowing direction in a horizontal direction relative to a floor surface of the first room R1 and a vertical flap 39b that changes the air blowing direction in the vertical direction relative to the floor surface of the first room R1. The compressor 31, the heat-source-side heat exchanger 33, the expansion device 34, and the load-side heat exchanger 35 are connected by refrigerant pipes 36, whereby a refrigerant circuit 30 in which refrigerant circulates is formed.

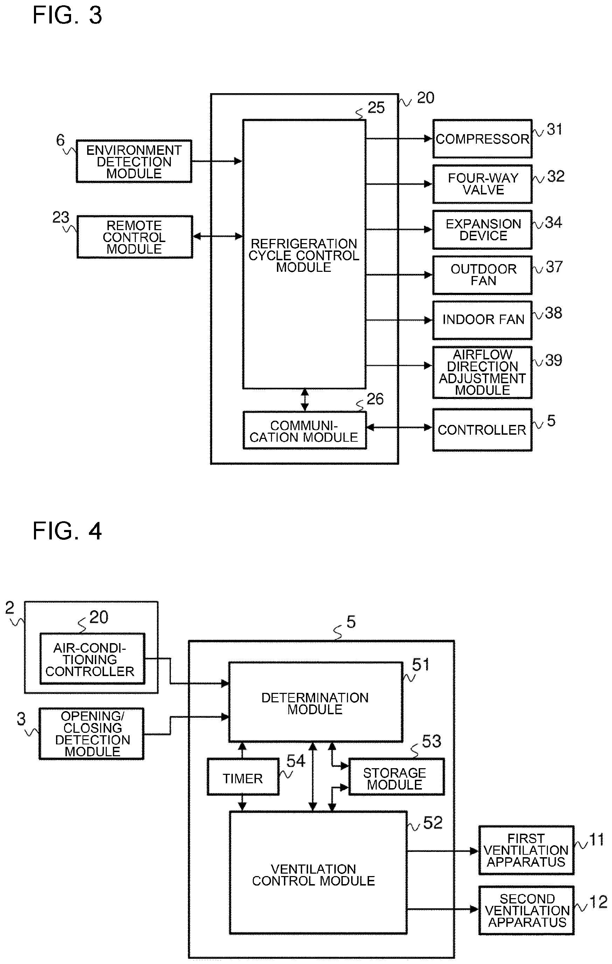

Fig. 3 is a block diagram illustrating a configuration example of the air-conditioning controller as illustrated in Fig. 2. The air-conditioning controller 20 is, for example, a microcomputer. As illustrated in Fig. 3, the air-conditioning controller 20 includes a refrigeration cycle control module 25 that controls the refrigeration cycle of refrigerant that circulates in the refrigerant circuit 30 and a communication module 26 that communicates with the controller 5.

The refrigeration cycle control module 25 controls the four-way valve 32 to switch the flow direction of refrigerant in the refrigerant circuit 30 between the flow direction of the refrigerant in a heating operation mode and that in a cooling operation mode. Furthermore, the refrigeration cycle control module 25 controls the operating frequency of the compressor 31, the opening degree of the expansion device 34, and the rotation speed of the outdoor fan 37 in such a manner as to cause the temperature and humidity detected by the environment detection module 6 to coincide with set values within a predetermined range. The set values for temperature and humidity are set by a user using the remote control unit 23. The refrigeration cycle control module 25 controls the rotation speed of the indoor fan 38 in accordance with an air volume that is set by the user using the remote control unit 23. The refrigeration cycle control module 25 controls angles of the horizontal flap 39a and the vertical flap 39b of the airflow direction adjustment module 39 in accordance with an airflow direction that is set by the user using the remote control unit 23.

When the air-conditioning apparatus 2 is in the heating operation or the cooling operation, the communication module 26 transmits information on the operation mode of the air-conditioning apparatus 2 to the controller 5.

Next, a configuration of the controller 5 as illustrated in Fig. 1 will be described. Fig. 4 is a functional block diagram illustrating a configuration example of the controller as illustrated in Fig. 1. The controller 5 is, for example, a microcomputer. As illustrated in Fig. 4, the controller 5 includes a determination module 51, a ventilation control module 52, a storage module 53, and a timer 54.

The determination module 51 determines the operation mode of the air-conditioning apparatus 2 and an opened/closed state detected by the opening/closing detection module 3. The ventilation control module 52 controls, based on the result of determination by the determination module 51, operations of the first ventilation apparatus 11 and the second ventilation apparatus 12. The storage module 53 stores various thresholds that correspond to determination criteria for determination processing by the determination module 51 and the results of arithmetic operation by the determination module 51. The timer 54 measures time.

When the determination module 51 determines that the air-conditioning apparatus 2 is in the heating operation mode, the ventilation control module 52 controls the first ventilation apparatus 11 and the second ventilation apparatus 12 as follows. The ventilation control module 52 causes the first ventilation apparatus 11 to perform an air supply operation and causes the second ventilation apparatus 12 to perform an exhaust ventilation operation. When the door 4 is in the opened state, the ventilation control module 52 controls the first ventilation apparatus 11 and the second ventilation apparatus 12 such that the air supply rate of the first ventilation apparatus 11 and the exhaust ventilation rate of the second ventilation apparatus 12 are equal to each other, that is, they both reach a first flow rate. Furthermore, when a continuation time tc for which the door 4 is in the closed state is longer than a predetermined first time threshold Th1, the ventilation control module 52 causes each of the air supply rate of the first ventilation apparatus 11 and the exhaust ventilation rate of the second ventilation apparatus 12 to be higher than the first flow rate. In the case of increasing the air supply rate of the first ventilation apparatus 11 and the exhaust ventilation rate of the second ventilation apparatus 12, the ventilation control module 52 increases the rotation speed of each of fans (not illustrated) of the first ventilation apparatus 11 and the second ventilation apparatus 12. The first time threshold Th1 is stored in the storage module 53. For example, the first time threshold Th1 is set based on conditions such as the temperature difference between the outside air temperature and the room temperature of the first room R1 and the humidity difference between the humidity of the outside air and the indoor humidity of the first room R1.

When the determination module 51 determines that the air-conditioning apparatus 2 is in the cooling operation mode, the ventilation control module 52 controls the first ventilation apparatus 11 and the second ventilation apparatus 12 as follows. When the door 4 is in the opened state, the ventilation control module 52 causes the first ventilation apparatus 11 to perform the exhaust ventilation operation and causes the second ventilation apparatus 12 to perform the air supply operation. Furthermore, when the door 4 is in the closed state, the ventilation control module 52 causes the first ventilation apparatus 11 to perform the air supply operation and causes the second ventilation apparatus 12 to perform the exhaust ventilation operation.

It should be noted that the controller 5 as illustrated in Fig. 1 may be integrated with, for example, a controller (not illustrated) for a smart speaker or a home energy management system (HEMS). Furthermore, although Fig. 1 illustrates the case where the controller 5 is installed in the first room R1, the controller 5 may be installed in the second room R2. The controller 5 may be installed in the air-conditioning apparatus 2 or may be integrated with the air-conditioning controller 20.

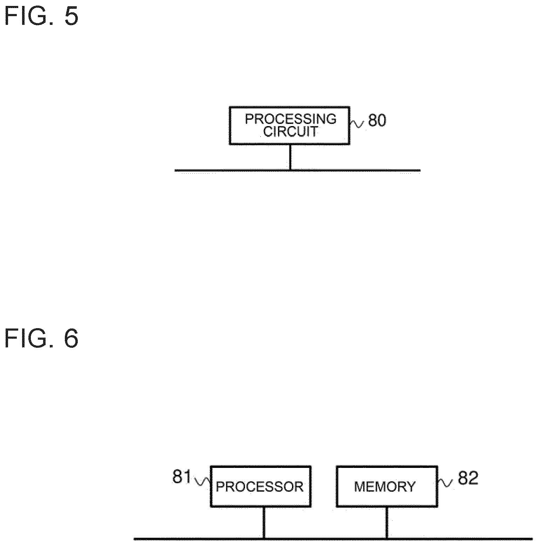

An example of hardware of the controller 5 as illustrated in Fig. 4 will be described. Fig. 5 is a hardware configuration diagram illustrating a configuration example of the controller as illustrated in Fig. 4. In the case where various functions of the controller 5 are fulfilled by hardware, the controller 5 as illustrated in Fig. 4 is a processing circuit 80 as illustrated in Fig. 5. Each of the functions of the determination module 51, the ventilation control module 52, the storage module 53, and the timer 54 as illustrated in Fig. 4 is fulfilled by the processing circuit 80.

In the case where each of the above functions is fulfilled by the hardware, the processing circuit 80 corresponds to a single circuit, a composite circuit, a programmed processor, a parallel-programmed processor, an application specific integrated circuit (ASIC), a field-programmable gate array (FPGA), or a combination of those modules. The functions of the determination module 51, the ventilation control module 52, the storage module 53, and the timer 54 may be fulfilled by respective processing circuits 80. Alternatively, the functions of the determination module 51, the ventilation control module 52, the storage module 53, and the timer 54 may be fulfilled by a single processing circuit 80.

Another example of the hardware of the controller 5 as illustrated in Fig. 4 will be described. Fig. 6 is a hardware configuration diagram illustrating another configuration example of the controller as illustrated in Fig. 4. In the case where the various functions of the controller 5 are fulfilled by software, the controller 5 as illustrated in Fig. 4 includes a processor 81 such as a central processing module (CPU) and a memory 82, as illustrated in Fig. 6. Each of the functions of the determination module 51, the ventilation control module 52, and the timer 54 is fulfilled by the processor 81 and the memory 82. Fig. 6 illustrates the processor 81 and the memory 82, which are connected such that they can communicate with each other. The memory 82 operates as the storage module 53. The timer 54 may be provided as a dedicated circuit (not illustrated).

In the case where each of the above functions is fulfilled by the software, the functions of the determination module 51, the ventilation control module 52, and the timer 54 are fulfilled by software, firmware, or a combination of software and firmware. The software and the firmware are described as programs and stored in the memory 82. The processor 81 fulfills each of the functions of the above modules by reading an associated program stored in the memory 82 and executing the read program.

As the memory 82, for example, a nonvolatile semiconductor memory such as a read only memory (ROM), a flash memory, an erasable and programmable ROM (EPROM), or an electrically erasable and programmable ROM (EEPROM) is used. Furthermore, as the memory 82, a volatile semiconductor memory such as a random access memory (RAM) may be used. Also, as the memory 82, a removable recording medium such as a magnetic disk, a flexible disk, an optical disc, a compact disc (CD), a mini disc (MD), or a digital versatile disc (DVD) may be used.

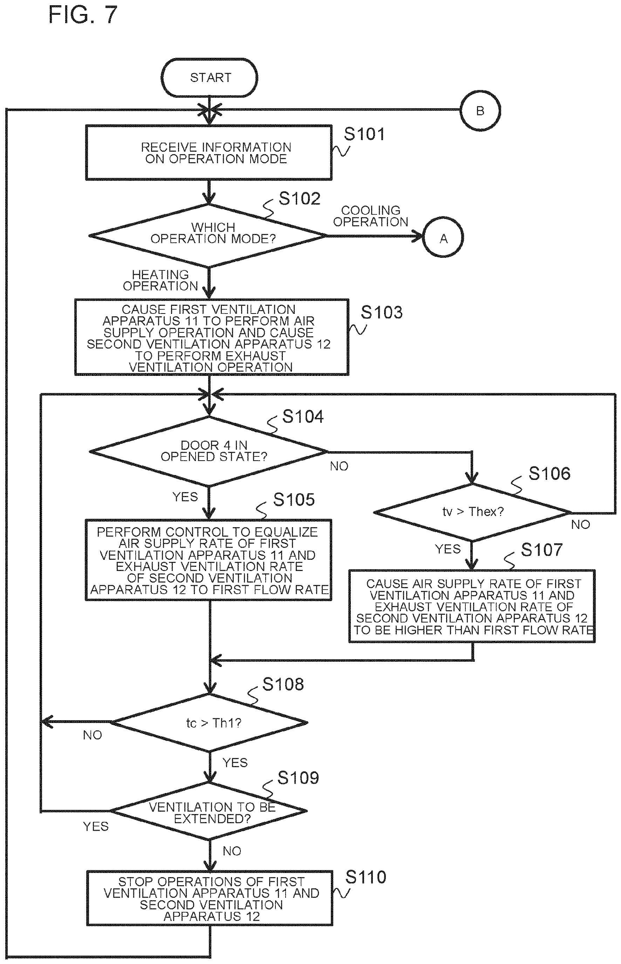

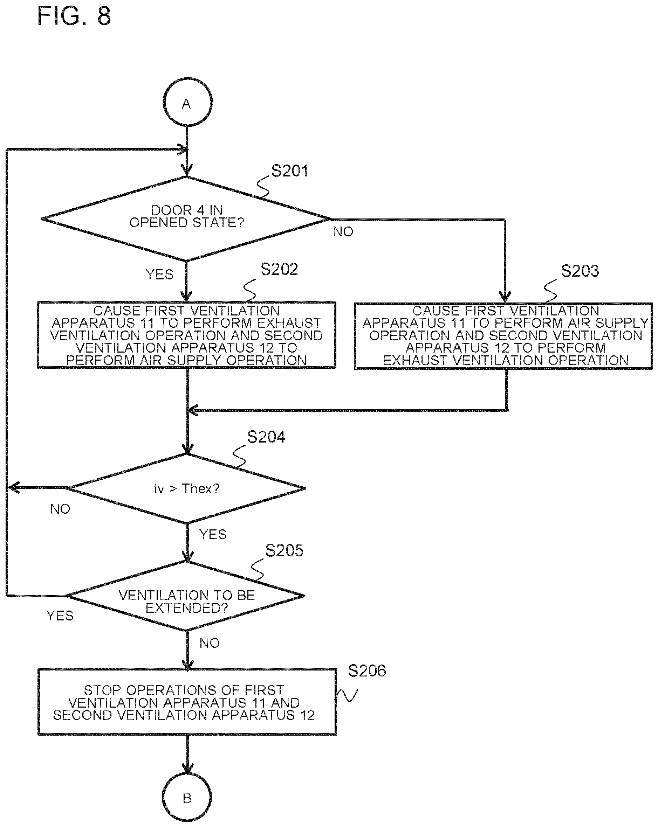

Next, an operation of the air-conditioning system 1 according to Embodiment 1 will be described. Figs. 7 and 8 are flowcharts indicating operation procedures of the air-conditioning system according to Embodiment 1. First of all, a condensation prevention method in the case where the air-conditioning apparatus 2 is in the heating operation will be described.

The determination module 51 receives information on an operation mode from the communication module 26 of the air-conditioning apparatus 2 (step S101), and determines whether the operation mode is a heating operation mode or a cooling operation mode (step S102). When it is determined in step 102 that the operation mode is the heating operation mode, the ventilation control module 52 causes the first ventilation apparatus 11 to perform the air supply operation and causes the second ventilation apparatus 12 to perform the exhaust ventilation operation (step S103). When the ventilation control module 52 causes the first ventilation apparatus 11 and the second ventilation apparatus 12 to start to perform the above operations, the determination module 51 causes the timer 54 to measure a ventilation time tv, which is an elapsed time from the time at which the operations start. In step S103, fresh outside air is supplied into the first room R1 that is air-conditioned by the heating operation and air is discharged from the second room R2 that is not directly air-conditioned by the air-conditioning apparatus 2, stagnation of the air in the rooms can be reduced.

Then, the determination module 51 determines, based on a detection value from the opening/closing detection module 3, whether or not the door 4 is in the opened state (step S104). In step S104, when the determination module 51 determines that the door 4 is in the opened state, the ventilation control module 52 controls the first ventilation apparatus 11 and the second ventilation apparatus 12 such that the air supply rate of the first ventilation apparatus 11 and the exhaust ventilation rate of the second ventilation apparatus 12 are both equalized to the first flow rate (step S105).

In contrast, when the determination module 51 determines in step S104, based on the detection value from the opening/closing detection module 3, that the door 4 is in the closed state, the determination module 51 causes the timer 54 to measure the continuation time tc for which the door 4 is in the closed state. The determination module 51 determines whether or not the continuation time tc for which the door 4 is in the closed state is longer than the first time threshold Th1 (step S106). When it is determined in step S106 that the continuation time tc is less than or equal to the first time threshold Th1, the processing by the determination module 51 returns to step S104.

When the determination module 51 determines in step S106 that the continuation time tc is longer than the first time threshold Th1, the ventilation control module 52 controls the air supply rate of the first ventilation apparatus 11 and the exhaust ventilation rate of the second ventilation apparatus 12 to be higher than the first flow rate. After steps S105 and S107, the determination module 51 determines whether or not the ventilation time tv is longer than a predetermined extension time threshold Thex (step S108). When it is determined in step S108 that the ventilation time tv is less than or equal to the extension time threshold Thex, the processing by the determination module 51 returns to step S104. The extension time threshold Thex is stored in the storage module 53.

When it is determined in step S108 that the ventilation time tv is longer than the extension time threshold Thex, in step S109, the determination module 51 notifies a user of information that requests inputting of information regarding whether or not to extend ventilation. For example, in the case where the remote control unit 23 includes a display device (not illustrated), the determination module 51 causes the remote control unit 23 to display a message that requests inputting of information regarding whether or not to extend ventilation, via the communication module 26 and the refrigeration cycle control module 25. When the user views the message displayed on the remote control unit 23 and inputs ventilation information, which is the information regarding whether or not to extend ventilation, the refrigeration cycle control module 25 transmits the ventilation information to the controller 5 via the communication module 26.

When the determination module 51 determines in step S109 that the ventilation information received from the air-conditioning apparatus 2 indicates that ventilation is to be extended, the processing by the determination module 51 returns to step S104. In contrast, when the determination module 51 determines in step S109 that the ventilation information indicates that ventilation is to be ended, the ventilation control module 52 stops the operations of the first ventilation apparatus 11 and the second ventilation apparatus 12 (step S110). Then, the processing by the determination module 51 returns to step S101.

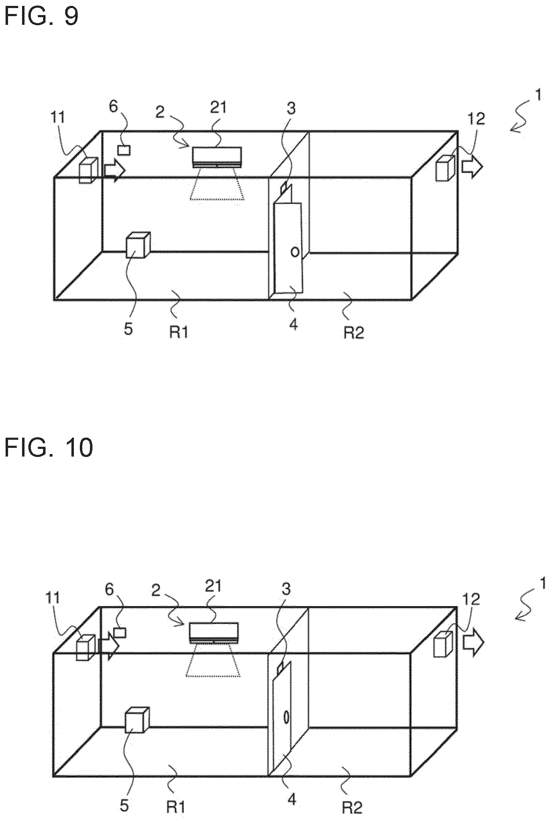

It will be described with reference to Figs. 9 and 10 how control is performed in the case where in the air-conditioning system 1 according to Embodiment 1, the air-conditioning apparatus 2 performs the heating operation. Fig. 9 illustrates the case where the door is in the opened state during the heating operation of the air-conditioning apparatus in the air-conditioning system as illustrated in Fig. 1. Fig. 10 illustrates the case where the door is in the closed state during the heating operation of the air-conditioning apparatus in the air-conditioning system as illustrated in Fig. 1.

In steps S103 and S105 as indicated in Fig. 7, the ventilation control module 52 causes the first ventilation apparatus 11 to perform the air supply operation and causes the second ventilation apparatus 12 to perform the exhaust ventilation operation. Fresh air is taken into the first room R1 from the outside, and air is discharged from the second room R2. When the door 4 is in the opened state as illustrated in Fig. 9, the fresh air supplied from the outside into the first room R1 is conditioned, and the conditioned air flows into the second room R2. In such a manner, a ventilation path is automatically provided, thereby increasing the temperature in the second room R2 and decreasing the humidity in the second room R2.

In contrast, when the door 4 is in the closed state as illustrated in Fig. 10, in step S107 as indicated in Fig. 7, the ventilation control module 52 increases the air supply rate of the first room R1 and the exhaust ventilation rate of the second room R2. That is, the ventilation control module 52 increases the rotation speed of each of the fans (not illustrated) of the first ventilation apparatus 11 and the second ventilation apparatus 12.

When outside air, which has a low humidity, is supplied into the first room R1, the humidity in the first room R1 is reduced, and when air is discharged from the second room R2, moisture accumulated in the second room R2 is removed therefrom. This can thus reduce occurrence of condensation in the first room R1 and the second room R2. For example, after the heating operation in a room such as a living room stops at nighttime, in many cases, the temperatures of walls and windows drop, thus causing condensation. However, by letting air out of the living room at nighttime, accumulated moisture can be removed, and occurrence of condensation can be reduced.

A function indicating a change of a condensation amount (surface water retention amount) that is made with an elapsed time t is expressed by the following equation (1).
[Math. 1]

$$\frac{\partial H}{\partial t} = \alpha(X_R - X_{SA}) \quad \cdots (1)$$

In the equation (1), H is a condensation amount (surface water retention amount) [g/m²], $\alpha$ is a moisture transfer rate [g/(m²·g/kg)·h], $X_R$ is the absolute humidity of indoor air [g/kg], and $X_{SA}$ is the absolute humidity of saturated water vapor [g/kg].

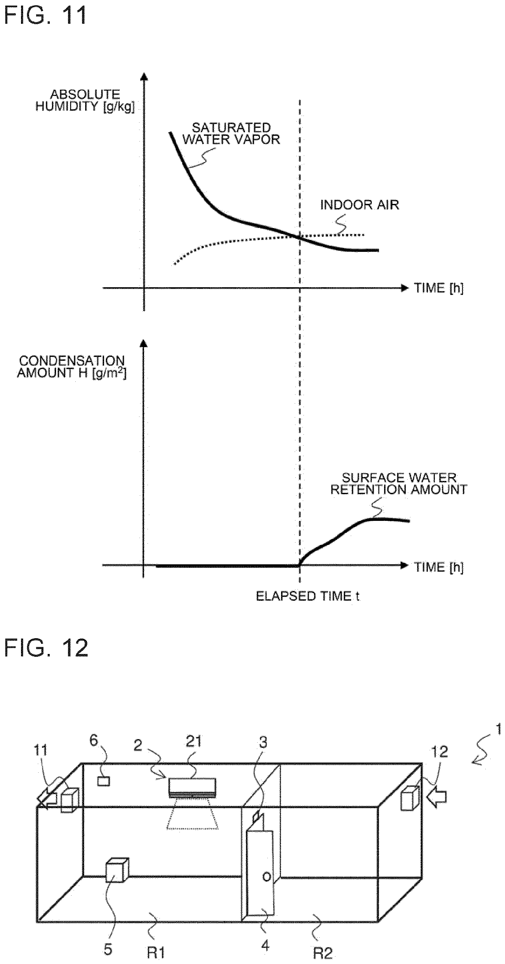

An example of the relationship between condensation and elapsed time will be described with reference to Fig. 11. Fig. 11 is a graph indicating an example of changes of the absolute humidity and the condensation amount that are made with the passage of time. For example, in winter, although the absolute humidity of saturated water vapor decreases as the temperature decreases, the absolute humidity of indoor air is raised when humidification is performed. Between the condensation amount H and the elapsed time t, a linear relationship is established. The relationship between the condensation amount H and the elapsed time t is expressed by the following equation (2). In the equation (2), $C_0$ and $C_1$ are coefficients.
[Math. 2]

$$H = C_0 t + C_1 \quad \cdots (2)$$

As indicated by the equation (2), after the absolute humidity of the indoor air becomes equal to the absolute humidity of the saturated water vapor, the condensation amount H is proportional to the elapsed time t. Thus, in step S107 as indicated in Fig. 7, the ventilation control module 52 may perform the following control. After the continuation time tc reaches the first time threshold Th1, the ventilation control module 52 increases the air supply rate of the first ventilation apparatus 11 and the exhaust ventilation rate of the second ventilation apparatus 12 such that the air supply rate of the first ventilation apparatus 11 and the exhaust ventilation rate of the second ventilation apparatus 12 are proportional to an overtime tex that exceeds the first time threshold Th1 in the continuation time tc.

Next, a condensation prevention method in the case where the air-conditioning apparatus 2 is in the cooling operation will be described with reference to Fig. 8. The processes of steps S205 and S206 as indicated in Fig. 8 are similar to the processes of steps S109 and S110 described above with reference to Fig. 7. Therefore, detailed description of the processes of steps S205 and S206 will be omitted.

When it is determined in step S102 as indicated in Fig. 7 that the operation mode is the cooling operation mode, the determination module 51 determines, based on the detection value from the opening/closing detection module 3, whether or not the door 4 is in the opened state (step S201). When the determination module 51 determines in step S201 that the door 4 is in the opened state, the ventilation control module 52 causes the first ventilation apparatus 11 to perform the exhaust ventilation operation and causes the second ventilation apparatus 12 to perform the air supply operation (step S202).

In contrast, when the determination module 51 determines in step S201 that the door 4 is in the closed state, the ventilation control module 52 causes the first ventilation apparatus 11 to perform the air supply operation and causes the second ventilation apparatus 12 to perform the exhaust ventilation operation (S203). In each of steps S202 and S203, when the ventilation control module 52 causes the first ventilation apparatus 11 and the second ventilation apparatus 12 to start to perform respective operations as described above, the determination module 51 causes the timer 54 to measure the ventilation time tv, which is an elapsed time from the start of the operations.

After steps S202 and S203, the determination module 51 determines whether or not the ventilation time tv is longer than the extension time threshold Thex (step S204). When it is determined in step S204 that the ventilation time tv is less than or equal to the extension time threshold Thex, the processing by the determination module 51 returns to step S201. The processes of steps S205 and S206 are similar to the processes of steps S109 and S110 described above with reference to Fig. 7, and their descriptions will thus be omitted.

In step S206, when the ventilation control module 52 stops the operations of the first ventilation apparatus 11 and the second ventilation apparatus 12, the processing by the determination module 51 returns to step S101 indicated in Fig. 7.

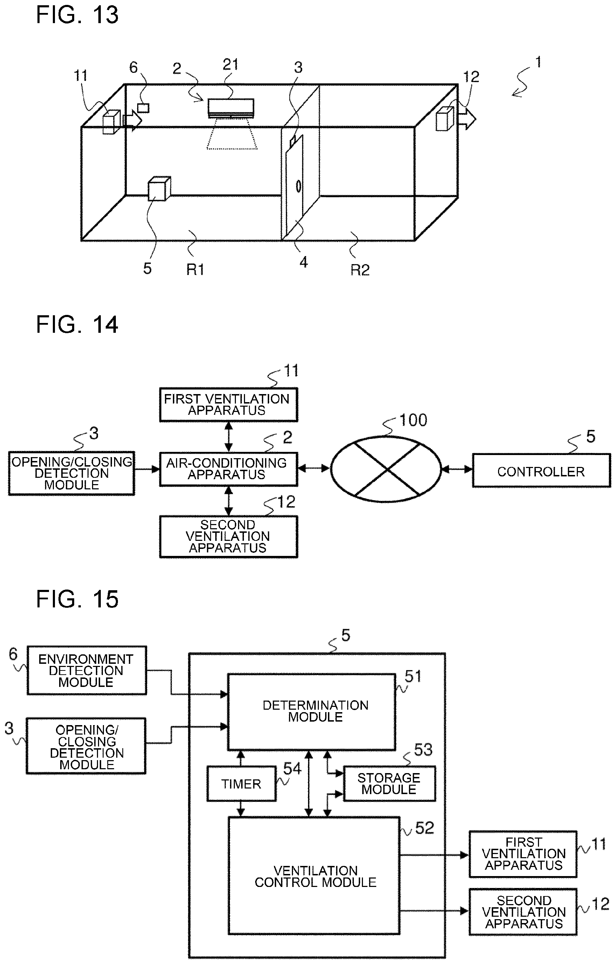

It will be described with reference to Figs. 12 and 13 how control is performed in the case where in the air-conditioning system 1 according to Embodiment 1, the air-conditioning apparatus 2 performs the cooling operation. Fig. 12 illustrates the case where the door is in the opened state during the cooling operation of the air-conditioning apparatus in the air-conditioning system as illustrated in Fig. 1. Fig. 13 illustrates the case where the door is in the closed state during the cooling operation of the air-conditioning apparatus in the air-conditioning system as illustrated in Fig. 1.

In step S202 as indicated in Fig. 8, the ventilation control module 52 causes the first ventilation apparatus 11 to perform the exhaust ventilation operation and causes the second ventilation apparatus 12 to perform the air supply operation. Thus, as illustrated in Fig. 12, when the door 4 is in the opened state in the cooling operation of the air-conditioning apparatus 2, air is discharged from the first room R1, and outside air is supplied into the second room R2. Fresh outside air is taken in the second room R2, and air in the first room R1 is discharged from the first room R1. Since the outside air is mixed with the air in the second room R2, the relative humidity of the supplied air is lowered. Thus, condensation does not easily occur at a wall having a low temperature, and heat invasion to the first room R1 can be reduced.

As illustrated in Fig. 13, when the door 4 is in the opened state, the temperature of air in the second room R2 is low. Thus, in order to prevent occurrence of condensation in the second room R2, it is necessary to prevent high-temperature and high-humidity outside air from flowing into the second room R2. Therefore, in step S203 as indicated in Fig. 8, the ventilation control module 52 causes the first ventilation apparatus 11 to perform the air supply operation and causes the second ventilation apparatus 12 to perform the exhaust ventilation operation. As a result, fresh outside air is taken in the first room R1, and air in the second room R2 is discharged from the second room R2. It is therefore possible to prevent a thermal shock that would be caused by a temperature difference between the first room R1 and the second room R2 and also prevent occurrence of condensation on a wall surface.

In the flows indicated in Figs. 7 and 8, the determination module 51 may update the extension time threshold Thex stored in the storage module 53 as follows. The determination module 51 causes communication time-series data indicating a time-series variation of the opened/closed state of the door 4 to be stored in the storage module 53. Then, the determination module 51 calculates the extension time threshold Thex at regular intervals Ts based on the communication time-series data stored in the storage module 53 and a predetermined calculation formula. The determination module 51 updates the calculated extension time threshold Thex to obtain the updated extension time threshold Thex to be stored in the storage module 53.

Each of the regular intervals Ts is, for example, one week to one month. The extension time threshold Thex is set to an appropriate value in accordance with a season and the life style of the user. For example, in the case where the first room R1 is a bedroom and the second room R2 is a hallway, in winter, the door 4 tends to be kept closed for a longer time than in summer. This is because in summer, the user often opens the door 4 to walk out to the hallway because the user cannot sleep well during sleep in summer, and in winter, the user often stays in the bedroom as much as possible during sleep.

It should be noted that regarding Embodiment 1, the above description is made on the premise that the controller 5 is installed in the first room R1; however, the controller 5 is not necessarily installed in a building having the first room R1 and the second room R2 and may be installed outside the building.

Fig. 14 is a block diagram illustrating another configuration example of the air-conditioning system according to Embodiment 1. In the configuration example as illustrated in Fig. 14, the environment detection module 6 as illustrated in Fig. 1 is provided in the air-conditioning apparatus 2 and is therefore not illustrated in Fig. 14. As illustrated in Fig. 14, the controller 5 is connected to the air-conditioning apparatus 2 via a network 100. Furthermore, the controller 5 is connected to the first ventilation apparatus 11, the second ventilation apparatus 12, and the opening/closing detection module 3 via the network 100 and the communication module 26 of the air-conditioning apparatus 2. The network 100 is, for example, the Internet.

Fig. 14 illustrates the case where the opening/closing detection module 3, the first ventilation apparatus 11, and the second ventilation apparatus 12 are connected to the network 100 via the communication module 26 of the air-conditioning apparatus 2. However, this illustration is not liming. For example, a wireless base station (not illustrated) may be installed in the first room R1 or the second room R2, and the opening/closing detection module 3, the first ventilation apparatus 11, and the second ventilation apparatus 12 may be connected to the network 100 via the wireless base station.

In the configuration example as illustrated in Fig. 14, the determination module 15 may be connected to a server (not illustrated) that provides meteorological information regarding an outside air temperature and whether rain will fall or not, via the network 100. When receiving the meteorological information from the server (not illustrated), the determination module 15 can determine, based on information regarding temperature, humidity, and airflow direction that is included in the meteorological information, whether or not the state of airflow between the first room R1 and the second room R2 is appropriate, and can also provide information for adjustment of the ventilation amount to the ventilation control module 52.

Also, the above description concerning Embodiment 1 is made on the premise that the controller 5 receives information regarding an operation mode from the air-conditioning apparatus 2. However, the controller 5 itself may determine the operation mode of the air-conditioning apparatus 2. Fig. 15 is a block diagram for explanation of another control by the controller in the air-conditioning system according to Embodiment 1.

As illustrated in Fig. 15, the environment detection module 6 is connected to the controller 5. In step S101 as indicated in Fig. 7, instead of receiving information regarding the operation mode from the air-conditioning apparatus 2, the determination module 51 determines the operation mode of the air-conditioning apparatus 2 based on a time-series variation of a detection value from the environment detection module 6. For example, when the temperature detected by the environment detection module 6 rises with the passage of time, the determination module 51 determines that the air-conditioning apparatus 2 is in the heating operation. When the temperature and humidity detected by the environment detection module 6 drop with the passage of time, the determination module 51 determines that the air-conditioning apparatus 2 is in the cooling operation.

The air-conditioning system 1 according to Embodiment 1 includes the air-conditioning apparatus 2 and the first ventilation apparatus 11 that are installed in the first room R1, the second ventilation apparatus 12 that is installed in the second room R2 adjacent to the first room R1, the opening/closing detection module 3 that detects opening and closing of the door 4, and the controller 5. The door 4 is located between the first room R1 and the second room R2. The first ventilation apparatus 11 is capable of switching the operation between the air supply operation in which air is sucked from an outdoor space to an indoor space and the exhaust ventilation operation in which air is discharged from the indoor space to the outdoor space. The second ventilation apparatus 12 is capable of switching the operation between the air supply operation in which air is sucked from the outdoor space to the indoor space and the exhaust ventilation operation in which air is discharged from the indoor space to the outdoor space. The controller 5 controls the operation of each of the first ventilation apparatus 11 and the second ventilation apparatus 12 based on the operation mode of the air-conditioning apparatus 2 and the opened/closed state detected by the opening/closing detection module 3.

According to Embodiment 1, it is determined whether or not the second room R2 is indirectly air-conditioned through the first room R1, based on the operation mode of the air-conditioning apparatus 2 and the communication state between the two rooms. Based on the result of this determination, the ventilation control module 52 controls the operations of the first ventilation apparatus 11 and the second ventilation apparatus 12, thereby reducing stagnation of air in the second room R2. As a result, condensation in the first room R1 and the second room R2 can be prevented.

According to Embodiment 1, even in the case where the air-conditioning apparatus 2 is not installed in the second room R2, it is possible to reduce occurrence of condensation in the second room R2, and prevent lowering of the degree of comfort in the indoor space. Furthermore, when the door 4 is in the opened state, air flows between the first room R1 and the second room R2, and when the door 4 is in the closed state, outside air is supplied into the first room R1 and air in the second room R2 is discharged therefrom, such that an appropriate humidity can be obtained. It is therefore possible to reduce the probability with which the humidity will decrease to an extent in which humidification cannot be performed by a humidifier, and the humidity of air in each of the first room R1 and the second room R2 can be kept at an appropriate value. According to Embodiment 1, by providing a ventilation path, it is possible to prevent a heat shock that would be caused by a temperature difference between the first room R1 and the second room R2 and also prevent condensation.

Embodiment 2

In an air-conditioning system according to Embodiment 2, an air-sending device that circulates air is installed in the second room R2. Regarding Embodiment 2, components that are the same as those in Embodiment 1 will be denoted by the same reference signs, and their detailed descriptions will be omitted. Furthermore, regarding Embodiment 2, descriptions of operations that are similar to those in Embodiment 1 will be omitted.

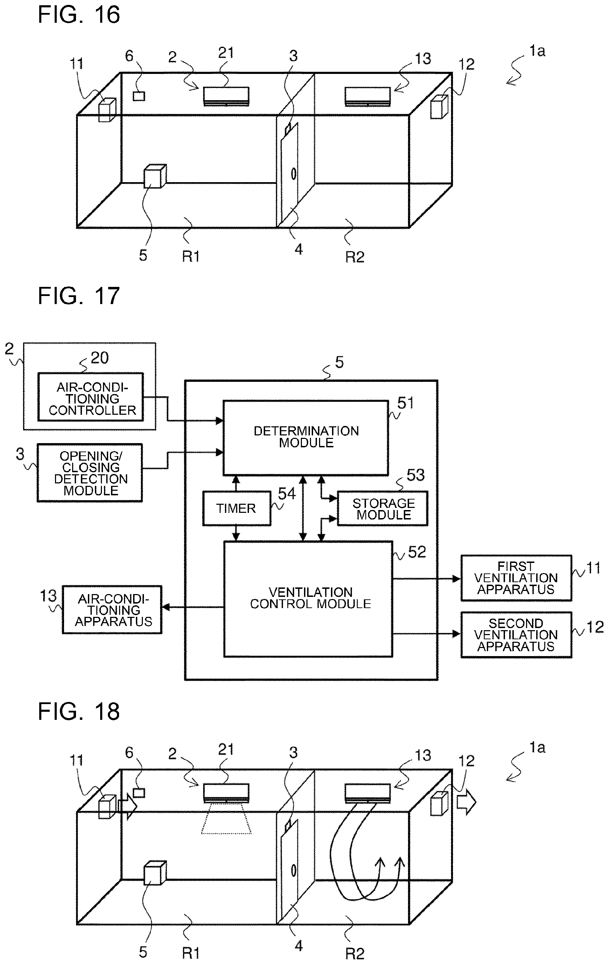

A configuration of the air-conditioning system according to Embodiment 2 will be described. Fig. 16 illustrates a configuration example of the air-conditioning system according to Embodiment 2. In an air-conditioning system 1a, an air-conditioning apparatus 13 is installed in the second room R2, in addition to the components described above with reference to Fig. 1. The configuration of the air-conditioning apparatus 13 is similar to that of the air-conditioning apparatus 2, and its detailed description will thus be omitted. The air-conditioning apparatus 13 includes the refrigerant circuit 30 provided as illustrated in Fig. 2. The following description is made with respect to the case where the air-conditioning apparatus 13 operates as an air-sending device that performs an air sending operation to circulate air in the second room R2.

Fig. 17 is a functional block diagram for an explanation of the control of the controller as illustrated in Fig. 16. When the determination module 51 determines that the air-conditioning apparatus 2 is in the heating operation mode and the continuation time tc for which the door 4 is in the closed state is longer than the first time threshold Th1, the ventilation control module 52 performs the following control. The ventilation control module 52 causes each of the air supply rate of the first ventilation apparatus 11 and the exhaust ventilation rate of the second ventilation apparatus 12 to be higher than the first flow rate and also causes the air-conditioning apparatus 13 to perform an air sending operation.

When the determination module 51 determines that the air-conditioning apparatus 2 is in the cooling operation mode and the continuation time tc for which the door 4 is in the closed state is longer than a predetermined second time threshold Th2, the ventilation control module 52 causes the air-conditioning apparatus 13 to perform the air sending operation. The second time threshold Th2 is stored in the storage module 53. For example, the second time threshold Th2 is set based on conditions such as a temperature difference between the outside air temperature and the room temperature of the second room R2 and a humidity difference between the humidity of the outside air and the indoor humidity of the second room R2.

Next, an operation of the air-conditioning system 1a according to Embodiment 2 will be described. First of all, a condensation prevention method in the case where the air-conditioning apparatus 2 is in the heating operation will be described with reference to Fig. 7. Of steps S101 to S110 as indicated in Fig. 7, the steps other than the step S107 are similar to those in Embodiment 1, and their detailed descriptions will thus be omitted.

In Embodiment 2, in step S107, the ventilation control module 52 causes each of the air supply rate of the first ventilation apparatus 11 and the exhaust ventilation rate of the second ventilation apparatus 12 to be higher than the first flow rate, and causes the air-conditioning apparatus 13 to perform the air sending operation.

Fig. 18 illustrates the case where the door is in the closed state during the heating operation of the air-conditioning apparatus in the first room in the air-conditioning system as illustrated in Fig. 16.

As illustrated in Fig. 18, when the door 4 is in the closed state and the continuation time tc for which the door 4 is closed is longer than the first time threshold Th1, the ventilation control module 52 causes each of the air supply rate of the first ventilation apparatus 11 and the exhaust ventilation rate of the second ventilation apparatus 12 to be higher than the first flow rate, and causes the air-conditioning apparatus 13 to perform the air sending operation. When the air-conditioning apparatus 13 performs the air sending operation, air in the second room R2 is circulated, and the state of the air is made uniform, thereby reducing occurrence of condensation. It is therefore possible to further reduce occurrence of a heat shock that would be caused by a temperature difference between the first room R1 and the second room R2 and also further reduce occurrence of condensation.

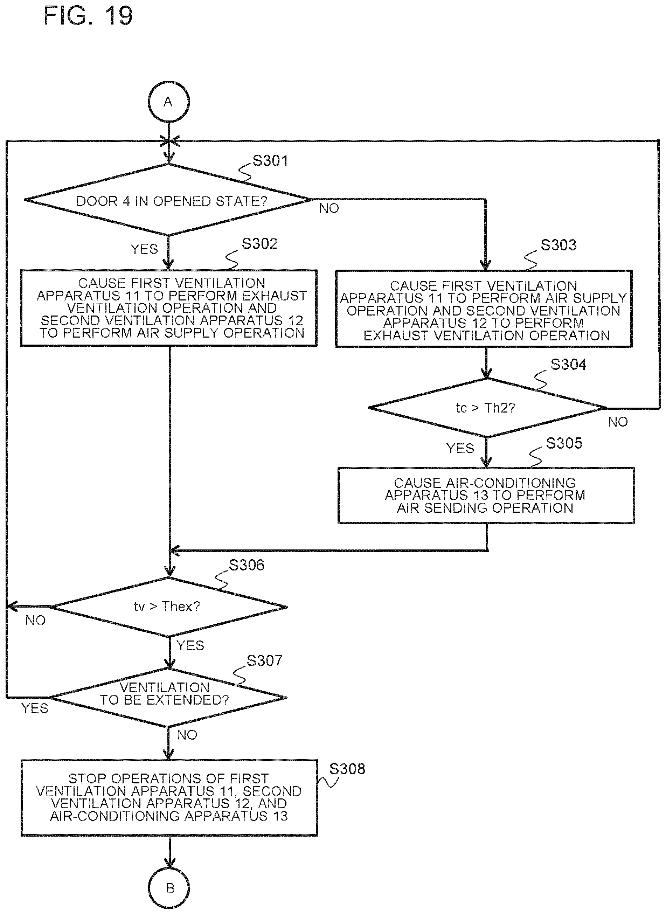

Next, a condensation prevention method in the case where the air-conditioning apparatus 2 is in the cooling operation will be described with reference to Fig. 19. Fig. 19 is a flowchart indicating an operation procedure of the operation of the air-conditioning system according to Embodiment 2 during the cooling operation of the air-conditioning apparatus in the first room illustrated in Fig. 16. The processes of steps S301 to S303, S306, and S307 as indicated in Fig. 19 are similar to the processes of steps S201 to S203, S204, and S205 as indicated in Fig. 8, and their detailed descriptions will thus be omitted.

In step S301, when determining that the door 4 is in the closed state, based on the detection value from the opening/closing detection module 3, the determination module 51 causes the timer 54 to measure the continuation time tc for which the door 4 is in the closed state. The determination module 51 determines whether or not the continuation time tc for which the door 4 is in the closed state is longer than the second time threshold Th2 (step S304). In step S304, when determination module 51 determines that the continuation time tc is less than or equal to the second time threshold Th2, the processing by the determination module 51 returns to step S301. In contrast, in step S304, when the determination module 51 determines that the continuation time tc is longer than the second time threshold Th2, the ventilation control module 52 causes the air-conditioning apparatus 13 to perform the air sending operation (step S305).

In step S307, when ventilation information received from the air-conditioning apparatus 2 indicates that ventilation is to be extended, the processing by the determination module 51 returns to step S301. In contrast, in step S307, when the determination module 51 determines that the ventilation information indicates that ventilation is to be ended, the ventilation control module 52 stops operations of the first ventilation apparatus 11, the second ventilation apparatus 12, and the air-conditioning apparatus 13 (step S308). Then, the processing by the determination module 51 returns to step S101 as indicated in Fig. 7.

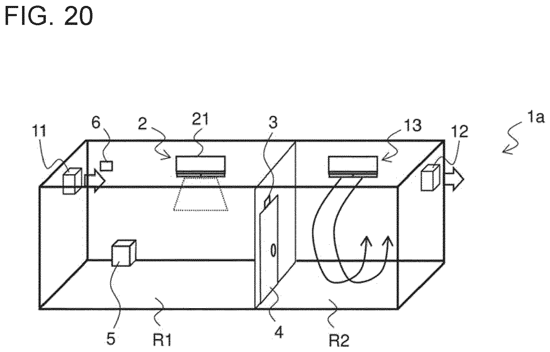

Fig. 20 illustrates the case where the door is in the closed state during the cooling operation of the air-conditioning apparatus in the first room in the air-conditioning system as illustrated in Fig. 16. As illustrated in Fig. 20, when the door 4 is in the closed state and the continuation time tc for which the door 4 is in the closed state is longer than the second time threshold Th2, the ventilation control module 52 causes the first ventilation apparatus 11 to perform the exhaust ventilation operation, causes the second ventilation apparatus 12 to perform the air supply operation, and causes the air-conditioning apparatus 13 to perform the air sending operation. When the air-conditioning apparatus 13 performs the air sending operation, air in the second room R2 is circulated, the state of the air is made more uniform, and occurrence of condensation is reduced. It is therefore possible to further reduce occurrence of a heat shock that would be caused by a temperature difference between the first room R1 and the second room R2 and also further reduce occurrence of condensation.

Regarding Embodiment 2, the above description is made on the premise that the air-sending device that circulates air in the second room R2 is the air-conditioning apparatus 13. However, the air-sending device may be a fan or a circulator.

In the air-conditioning system 1a according to Embodiment 2, the air-conditioning apparatus 13 that circulates air is installed in the second room R2, and the ventilation control module 52 causes the air-conditioning apparatus 13 to perform the air sending operation, when the continuation time tc for which the door 4 is in the closed state is longer than a predetermined time threshold.

According to Embodiment 2, air in the second room R2 is circulated, and the state of the air is made more uniform, whereby occurrence of a heat shock that would be caused by a temperature difference between the first room R1 and the second room R2 is further reduced and occurrence of condensation is also further reduced.

Regarding Embodiment 2, the above description is made on the premise that the air-conditioning apparatus 13 installed in the second room R2 performs the air sending operation. However, the air-conditioning apparatus 13 may perform the cooling operation and the heating operation. When one of the air-conditioning apparatus 2 and the air-conditioning apparatus 13 is in operation in the cooling operation mode or the heating operation mode, and the other one of the air-conditioning apparatus 2 and the air-conditioning apparatus 13 is in the stopped state, the control described above regarding Embodiment 1 can be applied. Furthermore, when one of the air-conditioning apparatus 2 and the air-conditioning apparatus 13 is in operation in the cooling operation mode or the heating operation mode, and the other one of the air-conditioning apparatus 2 and the air-conditioning apparatus 13 is caused to perform the air sending operation, the control described above regarding Embodiment 2 can be applied.

Furthermore, in Embodiment 2, the environment detection module 6 may also be provided in the second room R2. Hereinafter, the environment detection module 6 installed in the first room R1 will be referred to as a first environment detection module and the environment detection module 6 installed in the second room R2 will be referred to as a second environment detection module. In Embodiment 2, the controller 5 may perform the following control. The determination module 15 monitors a time-series variation of a temperature that is detected by the second environment detection module. When the determination module 15 determines that the temperature of air in the second room R2 continues to drop for a certain period of time (for example, five hours), the ventilation control module 52 causes the air-conditioning apparatus 13 to start the heating operation. After that, when the temperature of the air in the second room R2 rises to a higher temperature than a predetermined temperature (for example, 15 degrees Celsius), the ventilation control module 52 stops the air-conditioning apparatus 13. As described above, in the case where the air-conditioning apparatus 13 is installed in the second room R2, occurrence of condensation in the second room R2 may be reduced.

Reference Signs List

1, 1a: air-conditioning system, 2: air-conditioning apparatus, 3: opening/closing detection module, 4: door, 5: controller, 6: environment detection module, 11: first ventilation apparatus, 12: second ventilation apparatus, 13: air-conditioning apparatus, 20: air-conditioning controller, 21: indoor unit, 22: outdoor unit, 23: remote control unit, 25: refrigeration cycle control module, 26: communication module, 30: refrigerant circuit, 31: compressor, 32: four-way valve, 33: heat-source-side heat exchanger, 34: expansion device, 35: load-side heat exchanger, 36: refrigerant pipe, 37: outdoor fan, 38: indoor fan, 39: airflow direction adjustment module, 39a: horizontal flap, 39b: vertical flap, 51: determination module, 52: ventilation control module, 53: storage module, 54: timer, 80: processing circuit, 81: processor, 82: memory, 100: network, R1: first room, R2: second room.

**Claims**

1. An air-conditioning system (1) comprising:

   an air-conditioning apparatus (2) configured to perform a plurality of operations to condition air in a first room (R1), which correspond to respective operations modes;
   a first ventilation apparatus (11) for being installed in the first room (R1) and configured to be caused to switch an operation of the first ventilation apparatus (11) between an air supply operation in which air is sucked from an outdoor space into an indoor space and an exhaust ventilation operation in which air is discharged from the indoor space to the outdoor space; **characterized in that** the air conditioning system further comprises:
   a second ventilation apparatus (12) for being installed in a second room (R2) that is adjacent to the first room (R1) and configured to be caused to switch an operation of the second ventilation apparatus (12) between the air supply operation and the exhaust ventilation operation;
a detection module (3) configured to detect a communication state between the first room (R1) and the second room (R2); and
a controller (5) configured to control the operation of each of the first ventilation apparatus (11) and the second ventilation apparatus (12) based on the operation mode of the air-conditioning apparatus (2) and the communication state detected by the detection module (3).

2. The air-conditioning system (1) of claim 1, wherein the controller (5) is configured to determine the operation mode of the air-conditioning apparatus (2) and the communication state detected by the detection module (3), and cause the first ventilation apparatus (11) to perform the air supply operation and cause the second ventilation apparatus (12) to perform the exhaust ventilation operation, when the operation mode is a heating operation mode.

3. The air-conditioning system (1) of claim 2, wherein

the controller (5) includes a timer (54) configured to measure time, and
the controller (5) is configured to equalize an air supply rate of the first ventilation apparatus (11) and an exhaust ventilation rate of the second ventilation apparatus (12) to a first flow rate, when the operation mode is the heating operation mode and the communication state is an opened state, and
the controller (5) is configured to cause the air supply rate of the first ventilation apparatus (11) and the exhaust ventilation rate of the second ventilation apparatus (12) to be higher than the first flow rate, when the operation mode is the heating operation mode and a continuation time for which the communication state is continuously a closed state is longer than a predetermined first time threshold, the continuation time being measured by the timer (54).

4. The air-conditioning system (1) of claim 3, wherein the controller (5) is configured to perform, when causing each of the air supply rate of the first ventilation apparatus (11) and the exhaust ventilation rate of the second ventilation apparatus (12) to be higher than the first flow rate, an operation of increasing, after the continuation time reaches the first time threshold, the air supply rate and the exhaust ventilation rate such that the air supply rate and the exhaust ventilation rate are proportional to an overtime time exceeding the first time threshold in the continuation time.

5. The air-conditioning system (1) of claim 3 or 4, further comprising an air-sending device for being provided in the second room (R2) and configured to circulate air,
wherein the controller (5) is configured to cause the air-sending device to operate, when the operation mode is the heating operation mode and the continuation time for which the communication state is continuously the closed state is longer than the first time threshold.

6. The air-conditioning system (1) of any one of claims 1 to 5, wherein the controller (5) is configured to determine the operation mode of the air-conditioning apparatus (2) and the communication state detected by the detection module (3), and cause the first ventilation apparatus (11) to perform the exhaust ventilation operation and the second ventilation apparatus (12) to perform the air supply operation, when the operation mode is a cooling operation mode and the communication state is an opened state.

7. The air-conditioning system (1) of claim 6, wherein the controller (5) is configured to cause the first ventilation apparatus (11) to perform the air supply operation and cause the second ventilation apparatus (12) to perform the exhaust ventilation operation, when the operation mode is the cooling operation mode and the communication state is a closed state.

8. The air-conditioning system (1) of claim 6 or 7, further comprising an air-sending device for being provided in the second room (R2) and configured to circulate air, wherein

the controller (5) includes a timer (54) configured to measure time, and
the controller (5) is configured to cause the air-sending device to operate, when the operation mode is the cooling operation mode and continuation time for which the communication state is continuously a closed state and which is measured by the timer (54) is longer than a predetermined second time threshold.

9. The air-conditioning system (1) of any one of claims 1 to 8, wherein

the controller (5) includes a timer (54) configured to measure time, and
the controller (5) is configured to make a notification that indicates information requesting inputting of information regarding whether or not to extend ventilation, when a ventilation time that is an elapsed time from time at which the first ventilation apparatus (11) and the second ventilation apparatus (12) start to operate exceeds a predetermined extension time threshold, the ventilation time being measured by the timer (54).

**10.** The air-conditioning system (1) of claim 9, wherein

the controller (5) includes a storage module (53) configured to store the extension time threshold, and

the controller (5) is configured to cause the storage module (53) to store communication time-series data indicating a time-series variation of the communication state, and configured to calculate, at regular intervals, the extension time threshold based on the communication time-series data stored in the storage module (53) and a predetermined calculation formula, and update the calculated extension time threshold to obtain the updated extension time threshold to be stored in the storage module (53).

**11.** The air-conditioning system (1) of any one of claims 1 to 10, further comprising an environment detection module (6) for being provided in the first room (R1) and configured to detect a state of air, wherein the controller (5) is configured to determine the operation mode of the air-conditioning apparatus (2) based on a time-series variation of a detection value from the environment detection module (6).

**12.** A condensation prevention method for an air-conditioning system (1) that includes: an air-conditioning apparatus (2) configured to perform a plurality of operations to condition air in a first room (R1), which correspond to respective operation modes; a first ventilation apparatus (11) installed in the first room (R1) and configured to be caused to switch an operation of the first ventilation apparatus (11) between an air supply operation in which air is sucked from an outdoor space into an indoor space and an exhaust ventilation operation in which air is discharged from the indoor space to the outdoor space; the condensation prevention method **characterized in that** the air conditioning system further comprises: a second ventilation apparatus (12) installed in a second room (R2) that is adjacent to the first room (R1) and configured to be caused to switch an operation of the second ventilation apparatus (12) between the air supply operation and the exhaust ventilation operation; a detection module (3) configured to detect a communication state between the first room (R1) and the second room (R2); and a controller (5), the condensation prevention method comprising:

determining an operation mode of the air-conditioning apparatus (2) and the communication state detected by the detection module (3); and controlling the operation of each of the first ventilation apparatus (11) and the second ventilation apparatus (12) based on results of the determination of the operation mode and the communication state.

**Patentansprüche**

**1.** Klimatisierungssystem (1), umfassend:

eine Klimaanlage (2), die eingerichtet ist, eine Vielzahl von Vorgängen zur Klimatisierung eines ersten Raums (R1) durchzuführen, die den jeweiligen Betriebsmodi entsprechen; eine erste Belüftungsvorrichtung (11), die in dem ersten Raum (R1) installiert wird und eingerichtet ist, zu veranlassen, einen Betrieb der ersten Belüftungsvorrichtung (11) zwischen einem Luftzufuhrbetrieb, bei dem Luft von einem Außenraum in einen Innenraum angesaugt wird, und einem Abluft-Belüftungsbetrieb, bei dem Luft von dem Innenraum in den Außenraum abgegeben wird, umzuschalten; **dadurch gekennzeichnet, dass** das Klimatisierungssystem ferner umfasst: eine zweite Belüftungsvorrichtung (12), die in einem zweiten Raum (R2) installiert wird, benachbart zum ersten Raum (R1), und die eingerichtet ist, zu veranlassen, einen Betrieb der zweiten Belüftungsvorrichtung (12) zwischen dem Luftzufuhrbetrieb und dem Abluft-Belüftungsbetrieb umzuschalten; ein Erfassungsmodul (3), das eingerichtet ist, einen Kommunikationszustand zwischen dem ersten Raum (R1) und dem zweiten Raum (R2) zu erfassen; und eine Steuereinheit (5), die eingerichtet ist, den Betrieb der ersten Belüftungsvorrichtung (11) und der zweiten Belüftungsvorrichtung (12) auf der Grundlage des Betriebsmodus der Klimaanlage (2) und des vom Erfassungsmodul (3) erfassten Kommunikationszustands zu steuern.

**2.** Klimatisierungssystem (1) nach Anspruch 1, wobei die Steuereinheit (5) eingerichtet ist, den Betriebsmodus der Klimaanlage (2) und den vom Erfassungsmodul (3) erfassten Kommunikationszustand zu bestimmen und die erste Belüftungsvorrichtung (11) zu veranlassen, den Luftzufuhrbetrieb durchzuführen, und die zweite Belüftungsvorrichtung (12) zu veranlassen, den Abluft-Belüftungsbetrieb durchzuführen, wenn der Betriebsmodus ein Erwärmungsbetriebsmodus ist.

**3.** Klimatisierungssystem (1) nach Anspruch 2, wobei

die Steuereinheit (5) einen Timer (54) umfasst, der zur Zeitmessung eingerichtet ist, und die Steuereinheit (5) eingerichtet ist, eine Luftzufuhrrate der ersten Belüftungsvorrichtung (11) und eine Abluft-Belüftungsrate der zweiten Belüftungsvorrichtung (12) auf eine erste Strömungsrate auszugleichen, wenn der Betriebsmodus der Erwärmungsbetriebsmodus ist und der Kommunikationszustand ein geöffneter Zustand ist, und

die Steuereinheit (5) eingerichtet ist, die Luftzufuhrrate der ersten Belüftungsvorrichtung (11) und die Abluft-Belüftungsrate der zweiten Belüftungsvorrichtung (12) zu veranlassen, höher als die erste Strömungsrate zu sein, wenn der Betriebsmodus der Erwärmungsbetriebsmodus ist und eine Fortführungszeit, für die der Kommunikationszustand kontinuierlich ein geschlossener Zustand ist, länger als ein vorbestimmter erster Zeitschwellenwert ist, wobei die Fortführungszeit durch den Timer (54) gemessen wird.

4. Klimatisierungssystem (1) nach Anspruch 3, wobei die Steuereinheit (5) eingerichtet ist, wenn sie bewirkt, dass sowohl die Luftzufuhrrate der ersten Belüftungsvorrichtung (11) als auch die Abluft-Belüftungsrate der zweiten Belüftungsvorrichtung (12) höher als die erste Strömungsrate ist, einen Erhöhungsvorgang der Luftzufuhrrate und der Abluft-Belüftungsrate durchzuführen, nachdem die Fortführungszeit den ersten Zeitschwellenwert erreicht hat, so dass die Luftzufuhrrate und die Abluft-Belüftungsrate proportional zu einer Überstundenzeit sind, die den ersten Zeitschwellenwert in der Fortführungszeit überschreitet.

5. Klimatisierungssystem (1) nach Anspruch 3 oder 4, ferner umfassend eine Luftsendeeinrichtung, die in dem zweiten Raum (R2) vorgesehen ist und eingerichtet ist, Luft zirkulieren zu lassen, wobei die Steuereinheit (5) eingerichtet ist, die Luftsendeeinrichtung in Betrieb zu setzen, wenn der Betriebsmodus der Erwärmungsbetriebsmodus ist und die Fortführungszeit, für die der Kommunikationszustand kontinuierlich der geschlossene Zustand ist, länger als die erste Zeitschwellenwert ist.

6. Klimatisierungssystem (1) nach einem der Ansprüche 1 bis 5, wobei die Steuereinheit (5) eingerichtet ist, den Betriebsmodus der Klimaanlage (2) und den vom Erfassungsmodul (3) erfassten Kommunikationszustand zu bestimmen und die erste Belüftungsvorrichtung (11) zu veranlassen, den Abluft-Belüftungsbetrieb durchzuführen, und die zweite Belüftungsvorrichtung (12) zu veranlassen, den Luftzufuhrbetrieb durchzuführen, wenn der Betriebsmodus ein Kühlungsbetriebsmodus ist und der Kommunikationszustand ein geöffneter Zustand ist.

7. Klimatisierungssystem (1) nach Anspruch 6, wobei die Steuereinheit (5) eingerichtet ist, die erste Belüftungsvorrichtung (11) zu veranlassen, den Luftzufuhrbetrieb durchzuführen, und die zweite Belüftungsvorrichtung (12) zu veranlassen, den Abluft-Belüftungsbetrieb durchzuführen, wenn der Betriebsmodus der Kühlungsbetriebsmodus ist und der Kommunikationszustand ein geschlossener Zustand ist.

8. Klimatisierungssystem (1) nach Anspruch 6 oder 7, ferner umfassend eine Luftsendeeinrichtung, die in dem zweiten Raum (R2) vorgesehen und eingerichtet ist, Luft zirkulieren zu lassen, wobei

die Steuereinheit (5) einen Timer (54) umfasst, der zur Zeitmessung eingerichtet ist, und die Steuereinheit (5) eingerichtet ist, den Betrieb der Luftsendeeinrichtung zu veranlassen, wenn der Betriebsmodus der Kühlungsbetriebsmodus ist und die Fortführungszeit, für die der Kommunikationszustand kontinuierlich ein geschlossener Zustand ist und die von dem Timer (54) gemessen wird, länger als ein vorbestimmter zweiter Zeitschwellenwert ist.

9. Klimatisierungssystem (1) nach einem der Ansprüche 1 bis 8, wobei

die Steuereinheit (5) einen Timer (54) umfasst, der zur Zeitmessung eingerichtet ist, und die Steuereinheit (5) eingerichtet ist, eine Benachrichtigung auszugeben, die Informationen anzeigt, die zur Eingabe von Informationen darüber auffordern, ob die Belüftung verlängert werden soll oder nicht, wenn eine Belüftungszeit, die eine abgelaufene Zeit ab dem Zeitpunkt ist, zu dem die erste Belüftungsvorrichtung (11) und die zweite Belüftungsvorrichtung (12) zu arbeiten beginnen, einen vorbestimmten Verlängerungszeitschwellenwert überschreitet, wobei die Belüftungszeit von dem Timer (54) gemessen wird.

10. Klimatisierungssystem (1) nach Anspruch 9, wobei

die Steuereinheit (5) ein Speichermodul (53) enthält, das eingerichtet ist, den Verlängerungszeitschwellenwert zu speichern, und die Steuereinheit (5) eingerichtet ist, das Speichermodul (53) zu veranlassen, Kommunikationszeitreihendaten zu speichern, die eine Zeitreihenvariation des Kommunikationszustands anzeigen, und eingerichtet ist, in regelmäßigen Intervallen den Verlängerungszeitschwellenwert auf der Grundlage der im Speichermodul (53) gespeicherten Kommunikationszeitreihendaten und einer vorbestimmten Berechnungsformel zu berechnen und den berechneten Verlängerungszeitschwellenwert zu aktualisieren, um den aktualisierten Verlängerungszeitschwellenwert zu erhalten, die im Speichermodul (53) gespeichert wird.

11. Klimatisierungssystem (1) nach einem der Ansprüche 1 bis 10, ferner umfassend ein Umgebungserfassungsmodul (6), das in dem ersten Raum (R1) vorgesehen ist und eingerichtet ist, einen Luftzustand zu erfassen,

wobei die Steuereinheit (5) eingerichtet ist, den Betriebsmodus der Klimaanlage (2) auf der Grundlage einer Zeitreihenvariation eines Erfassungswerts von dem Umgebungserfassungsmodul (6) zu bestimmen.

12. Kondensationsverhinderungsverfahren für ein Klimatisierungssystem (1), umfassend: eine Klimaanlage (2), die eingerichtet ist, eine Vielzahl von Betrieben zum Klimatisieren von Luft in einem ersten Raum (R1) durchzuführen, die den jeweiligen Betriebsmodi entsprechen; eine erste Belüftungsvorrichtung (11), die in dem ersten Raum (R1) installiert ist und eingerichtet ist, zu veranlassen, einen Betrieb der ersten Belüftungsvorrichtung (11) zwischen einem Luftzufuhrbetrieb, bei dem Luft von einem Außenraum in einen Innenraum angesaugt wird, und einem Abluft-Belüftungsbetrieb, bei dem Luft von dem Innenraum in den Außenraum abgegeben wird, umzuschalten; Kondensationsverhinderungsverfahren, **dadurch gekennzeichnet, dass** das Klimatisierungssystem ferner umfasst:

eine zweite Belüftungsvorrichtung (12), die in einem zweiten Raum (R2) installiert ist, benachbart zum ersten Raum (R1), und die eingerichtet ist, zu veranlassen, einen Betrieb der zweiten Belüftungsvorrichtung (12) zwischen dem Luftzufuhrbetrieb und dem Abluft-Belüftungsbetrieb umzuschalten; ein Erfassungsmodul (3), das eingerichtet ist, einen Kommunikationszustand zwischen dem ersten Raum (R1) und dem zweiten Raum (R2) zu erfassen; und eine Steuereinheit (5), wobei das Kondensationsverhinderungsverfahren umfasst:

Bestimmen eines Betriebsmodus der Klimaanlage (2) und des vom Erfassungsmodul (3) erfassten Kommunikationszustands; und Steuern des Betriebs der ersten Belüftungsvorrichtung (11) und der zweiten Belüftungsvorrichtung (12) auf der Grundlage der Ergebnisse der Bestimmung des Betriebsmodus und des Kommunikationszustands.

**Revendications**

1. Système de climatisation (1) comprenant :

un appareil de climatisation (2) configuré de manière à mettre en oeuvre une pluralité d'opérations de climatisation dans une première pièce (R1), lesquelles correspondent à des modes d'opérations respectifs ; un premier appareil de ventilation (11) destiné à être installé dans la première pièce (R1) et configuré de manière à être amené à commuter une opération du premier appareil de ventilation (11), entre une opération d'alimentation en air dans laquelle de l'air est aspiré depuis un espace extérieur dans un espace intérieur, et une opération de ventilation par aspiration dans laquelle de l'air est évacué depuis l'espace intérieur vers l'espace extérieur ; **caractérisé en ce que** le système de climatisation comprend en outre :

un deuxième appareil de ventilation (12) destiné à être installé dans une deuxième pièce (R2) qui est adjacente à la première pièce (R1), et configuré de manière à être amené à commuter une opération du deuxième appareil de ventilation (12) entre l'opération d'alimentation en air et l'opération de ventilation par aspiration ; un module de détection (3) configuré de manière à détecter un état de communication entre la première pièce (R1) et la deuxième pièce (R2) ; et un contrôleur (5) configuré de manière à commander l'opération de chacun du premier appareil de ventilation (11) et du deuxième appareil de ventilation (12) sur la base du mode d'opération de l'appareil de climatisation (2) et de l'état de communication détecté par le module de détection (3).

2. Système de climatisation (1) selon la revendication 1, dans lequel le contrôleur (5) est configuré de manière à déterminer le mode d'opération de l'appareil de climatisation (2) et l'état de communication détecté par le module de détection (3), et à amener le premier appareil de ventilation (11) à mettre en oeuvre l'opération d'alimentation en air, et le deuxième appareil de ventilation (12) à mettre en oeuvre l'opération de ventilation par aspiration, lorsque le mode d'opération est un mode d'opération de chauffage.

3. Système de climatisation (1) selon la revendication 2, dans lequel :

le contrôleur (5) inclut un temporisateur (54) configuré de manière à mesurer une durée ; et le contrôleur (5) est configuré de manière à égaliser un débit d'alimentation en air du premier appareil de ventilation (11) et un débit de ventilation par aspiration du deuxième appareil de ventilation (12) à un premier débit, lorsque le mode d'opération est le mode d'opération de chauffage et que l'état de communication est un état ouvert ; et le contrôleur (5) est configuré de manière à amener le débit d'alimentation en air du premier appareil de ventilation (11) et le débit de ventilation par aspiration du deuxième appareil de ventilation (12) à être supérieurs au premier débit, lorsque le mode d'opération est le mode d'opération de chauffage, et qu'une durée de continuation, pendant laquelle l'état de communication est continuellement un état fermé, est supérieure à un premier seuil de temps prédéterminé, dans laquelle la durée de continuation est mesurée par le temporisateur (54).

4. Système de climatisation (1) selon la revendication 3, dans lequel le contrôleur (5) est configuré de manière à mettre en oeuvre, lorsque chaque débit, parmi le débit d'alimentation en air du premier appareil de ventilation (11) et le débit de ventilation par aspiration du deuxième appareil de ventilation (12), est amené à être supérieur au premier débit, une opération consistant à augmenter, après que la durée de continuation atteint le premier seuil de temps, le débit d'alimentation en air et le débit de ventilation par aspiration, de sorte que le débit d'alimentation en air et le débit de ventilation par aspiration sont proportionnels à un temps de dépassement qui dépasse le premier seuil de temps dans la durée de continuation.

5. Système de climatisation (1) selon la revendication 3 ou 4, comprenant en outre un dispositif d'envoi d'air destiné à être fourni dans la deuxième pièce (R2) et configuré de manière à faire circuler de l'air ; dans lequel le contrôleur (5) est configuré de manière à amener le dispositif d'envoi d'air à fonctionner, lorsque le mode d'opération est le mode d'opération de chauffage, et que la durée de continuation, pendant laquelle l'état de communication est continuellement l'état fermé, est plus longue que le premier seuil de temps.

6. Système de climatisation (1) selon l'une quelconque des revendications 1 à 5, dans lequel le contrôleur (5) est configuré de manière à déterminer le mode d'opération de l'appareil de climatisation (2) et l'état de communication détecté par le module de détection (3), et à amener le premier appareil de ventilation (11) à mettre en oeuvre l'opération de ventilation par aspiration, et le deuxième appareil de ventilation (12) à mettre en oeuvre l'opération d'alimentation en air, lorsque le mode d'opération est un mode d'opération de refroidissement et que l'état de communication est un état ouvert.

7. Système de climatisation (1) selon la revendication 6, dans lequel le contrôleur (5) est configuré de manière à amener le premier appareil de ventilation (11) à mettre en oeuvre l'opération d'alimentation en air et à amener le deuxième appareil de ventilation (12) à mettre en oeuvre l'opération de ventilation par aspiration, lorsque le mode d'opération est le mode d'opération de refroidissement et que l'état de communication est un état fermé.

8. Système de climatisation (1) selon la revendication 6 ou 7, comprenant en outre un dispositif d'envoi d'air destiné à être fourni dans la deuxième pièce (R2) et configuré de manière à faire circuler de l'air, dans lequel :

le contrôleur (5) inclut un temporisateur (54) configuré de manière à mesurer une durée ; et le contrôleur (5) est configuré de manière à amener le dispositif d'envoi d'air à fonctionner lorsque le mode d'opération est le mode d'opération de refroidissement, et que la durée de continuation, pendant laquelle l'état de communication est continuellement un état fermé, et qui est mesurée par le temporisateur (54), est plus longue qu'un deuxième seuil de temps prédéterminé.

9. Système de climatisation (1) selon l'une quelconque des revendications 1 à 8, dans lequel :

le contrôleur (5) inclut un temporisateur (54) configuré de manière à mesurer une durée ; et le contrôleur (5) est configuré de manière à émettre une notification qui indique des informations demandant la saisie d'informations concernant la prolongation ou non de la ventilation, lorsqu'une durée de ventilation, qui est une durée écoulée à partir de l'instant où le premier appareil de ventilation (11) et le deuxième appareil de ventilation (12) commencent à fonctionner, dépasse un seuil de temps de prolongation prédéterminé, la durée de ventilation étant mesurée par le temporisateur (54).

10. Système de climatisation (1) selon la revendication 9, dans lequel :

le contrôleur (5) inclut un module de stockage (53) configuré de manière à stocker le seuil de temps de prolongation ; et le contrôleur (5) est configuré de manière à amener le module de stockage (53) à stocker des données de séries temporelles de communication indiquant une variation de séries temporelles de l'état de communication, et est configuré de manière à calculer, à intervalles réguliers, le seuil de temps de prolongation, sur la base des données de séries temporelles de communication stockées dans le module de stockage (53) et d'une formule de calcul prédéterminée, et à mettre à jour le seuil de temps de prolongation calculé en vue d'obtenir le seuil de temps de prolongation mis à jour devant être stocké dans le module de stockage (53).

11. Système de climatisation (1) selon l'une quelconque des revendications 1 à 10, comprenant en outre un module de détection d'environnement (6) destiné à être fourni dans la première pièce (R1) et configuré de manière à détecter un état de l'air ;

dans lequel le contrôleur (5) est configuré de manière à déterminer le mode d'opération de l'appareil de climatisation (2) sur la base d'une variation de séries temporelles d'une valeur de détection provenant du module de détection d'environnement (6).

12. Procédé de prévention de condensation pour un système de climatisation (1) qui inclut : un appareil de climatisation (2) configuré de manière à mettre en oeuvre une pluralité d'opérations de climatisation dans une première pièce (R1), lesquelles correspondent à des modes d'opérations respectifs ; un premier appareil de ventilation (11) installé dans la première pièce (R1) et configuré de manière à être amené à commuter une opération du premier appareil de ventilation (11) entre une opération d'alimentation en air dans laquelle de l'air est aspiré depuis un espace extérieur dans un espace intérieur et une opération de ventilation par aspiration dans laquelle de l'air est évacué depuis l'espace intérieur vers l'espace extérieur ; le procédé de prévention de condensation étant **caractérisé en ce que** le système de climatisation comprend en outre :

un deuxième appareil de ventilation (12) installé dans une deuxième pièce (R2) qui est adjacente à la première pièce (R1), et configuré de manière à être amené à commuter une opération du deuxième appareil de ventilation (12) entre l'opération d'alimentation en air et l'opération de ventilation par aspiration ; un module de détection (3) configuré de manière à détecter un état de communication entre la première pièce (R1) et la deuxième pièce (R2) ; et un contrôleur (5), le procédé de prévention de condensation comprenant les étapes ci-dessous consistant à :

déterminer un mode d'opération de l'appareil de climatisation (2) et l'état de communication détecté par le module de détection (3) ; et commander l'opération de chaque appareil parmi le premier appareil de ventilation (11) et le deuxième appareil de ventilation (12), sur la base de résultats de la détermination du mode d'opération et de l'état de communication.

FIG. 1

FIG. 2

## FIG. 3

## FIG. 4

FIG. 5

PROCESSING
CIRCUIT ⌇ 80

FIG. 6

81 ⌇ PROCESSOR       MEMORY ⌇ 82

# FIG. 7

START

B

**RECEIVE INFORMATION ON OPERATION MODE** — S101

**WHICH OPERATION MODE?** — S102

COOLING OPERATION → A

HEATING OPERATION

**CAUSE FIRST VENTILATION APPARATUS 11 TO PERFORM AIR SUPPLY OPERATION AND CAUSE SECOND VENTILATION APPARATUS 12 TO PERFORM EXHAUST VENTILATION OPERATION** — S103

**DOOR 4 IN OPENED STATE?** — S104

NO

YES — S105

**PERFORM CONTROL TO EQUALIZE AIR SUPPLY RATE OF FIRST VENTILATION APPARATUS 11 AND EXHAUST VENTILATION RATE OF SECOND VENTILATION APPARATUS 12 TO FIRST FLOW RATE**

**tv > Thex?** — S106

NO

YES — S107

**CAUSE AIR SUPPLY RATE OF FIRST VENTILATION APPARATUS 11 AND EXHAUST VENTILATION RATE OF SECOND VENTILATION APPARATUS 12 TO BE HIGHER THAN FIRST FLOW RATE**

**tc > Th1?** — S108

NO

YES

**VENTILATION TO BE EXTENDED?** — S109

YES

NO

**STOP OPERATIONS OF FIRST VENTILATION APPARATUS 11 AND SECOND VENTILATION APPARATUS 12** — S110

# FIG. 8

A

S201

DOOR 4 IN
OPENED STATE?

NO

YES

S202

CAUSE FIRST VENTILATION
APPARATUS 11 TO PERFORM EXHAUST
VENTILATION OPERATION AND SECOND
VENTILATION APPARATUS 12 TO
PERFORM AIR SUPPLY OPERATION

S203

CAUSE FIRST VENTILATION
APPARATUS 11 TO PERFORM AIR SUPPLY
OPERATION AND SECOND VENTILATION
APPARATUS 12 TO PERFORM
EXHAUST VENTILATION OPERATION

S204

tv > Thex?

NO

YES

S205

VENTILATION TO BE
EXTENDED?

YES

NO

S206

STOP OPERATIONS OF FIRST
VENTILATION APPARATUS 11 AND
SECOND VENTILATION APPARATUS 12

B

FIG. 9

FIG. 10

FIG. 11

FIG. 12

FIG. 13

FIG. 14

FIG. 15

FIG. 16

FIG. 17

2
20
AIR-CONDI-
TIONING
CONTROLLER

3
OPENING/
CLOSING
DETECTION
MODULE

5

51
DETERMINATION
MODULE

54
TIMER

53
STORAGE
MODULE

52
VENTILATION
CONTROL MODULE

13
AIR-CONDI-
TIONING
APPARATUS

11
FIRST
VENTILATION
APPARATUS

12
SECOND
VENTILATION
APPARATUS

FIG. 18

# FIG. 19

A

S301

DOOR 4 IN OPENED STATE? — NO

YES

S302

CAUSE FIRST VENTILATION APPARATUS 11 TO PERFORM EXHAUST VENTILATION OPERATION AND SECOND VENTILATION APPARATUS 12 TO PERFORM AIR SUPPLY OPERATION

S303

CAUSE FIRST VENTILATION APPARATUS 11 TO PERFORM AIR SUPPLY OPERATION AND SECOND VENTILATION APPARATUS 12 TO PERFORM EXHAUST VENTILATION OPERATION

S304

tc > Th2? — NO

YES

S305

CAUSE AIR-CONDITIONING APPARATUS 13 TO PERFORM AIR SENDING OPERATION

S306

tv > Thex? — NO

YES

S307

VENTILATION TO BE EXTENDED? — YES

NO

S308

STOP OPERATIONS OF FIRST VENTILATION APPARATUS 11, SECOND VENTILATION APPARATUS 12, AND AIR-CONDITIONING APPARATUS 13

B

FIG. 20

**REFERENCES CITED IN THE DESCRIPTION**

**Patent documents cited in the description**

- JP 2004324942 A
- JP 2005003321 A
- KR 101498572